(19) Europäisches Patentamt

European Patent Office

Office européen des brevets

(11) **EP 1 624 450 A1**

(12) **EUROPEAN PATENT APPLICATION**

(43) Date of publication:
**08.02.2006 Bulletin 2006/06**

(51) Int Cl.:
***G11B 7/00*** *(2006.01)*

(21) Application number: **04405502.8**

(22) Date of filing: **06.08.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(71) Applicant: **CSEM**
**Centre Suisse d'Electronique et de Microtechnique SA**
**2007 Neuchâtel (CH)**

(72) Inventors:
• **Beer, Stephan**
**8032 Zürich (CH)**

• **Lustenberger, Felix**
**6330 Cham (CH)**
• **Zeller, Philipp**
**8063 Zürich (CH)**

(74) Representative: **Schneider Feldmann AG**
**Patent- und Markenanwälte**
**Postfach**
**Europastrasse 17**
**8152 Glattbrugg (CH)**

(54) **Parallel OCT readout schemes for optical data-storage applications**

(57) Future high-capacity optical data-storage media (9) will exhibit a multitude of storage layers (91, 92, ...). In order to gain additional bandwidth compared to conventional storage systems, a multitude of storage layers (91, 92, ...) has to be accessed in parallel. Parallel optical low-coherence tomography (OCT) enables such a high-throughput readout scheme. By using a low-coherence light source (1) in the readout data path, interference signals are only created at exactly one storage depth and hence separate the various storage layers (91, 92, ...) very efficiently. Due to the use of a dedicated smart-pixel image sensor (4), several hundreds of layers (91, 92, ...) may be accessed in parallel at the same time.

Fig. 3

EP 1 624 450 A1

**Description**

FIELD OF THE INVENTION

The present invention relates to readout schemes for optical data-storage apparatus employing multilayer storage media. In these schemes, optical low-coherence tomography (OCT) is employed in combination with parallel smart-pixel photo sensors to read out more than one layer in parallel (parallel OCT, pOCT), in order to gain or trade-off combined data throughput with reduced speed of a single readout channel. In particular, the invention relates to a method and an apparatus for reading data from an optical multilayer storage device.

At the same time, this measurement and data-sensing technique relates to readout schemes with a reduced number of movable mechanical parts in the data path or no movable mechanical parts at all by trading off the number of photoreception sites with mechanical complexity.

Furthermore, the present invention relates to smart pixels, e.g., pixel architectures allowing in-pixel signal processing in order to reduce the amount of data to be read out in an early stage of the signal-processing chain or to extract certain features such as amplitude and phase of the captured light by an in-pixel signal demodulation technique.

The present invention relates in particular to all of these sensing and measurement techniques that require dense one- or two-dimensional arrays of functional pixels.

BACKGROUND OF THE INVENTION

Optical data storage becomes more and more popular due to its enormous potential in storage density and its ease of use in the everyday life. Compact disks (CDs) and later on digital versatile disks (DVDs) enabled the storage of large amounts of musical and movie-picture data on a single 12 cm disk. But also the computer industry benefited considerably from these storage modalities. Information distribution of program data has become much easier during the last few years. Furthermore, the backup process of personal computers took advantage of the writable or even re-writable CDs and DVDs. But it is foreseeable that in the near future new data storage media and procedures will be needed in order to keep up with ever increasing demands in data-storage capacity and speed. One single movie in HDTV format does not fit anymore on a single DVD. But also multi-channel audio tracks and new audio data formats such as the super-audio CD (SACD) need more data-storage capacity in order to level with current play times.

As for existing optical storage media and formats, an overview of the key physical parameters is given in **Table I.**

**Tab. I**

| Topic | CD | DVD | HD DVD | Blu-ray Disk |
|---|---|---|---|---|
| Shortest pit length | 0.834 $\mu$m | 0.4 $\mu$m | 0.13/ 0.14 $\mu$m | 0.160/ 0.149/ 0.138 $\mu$m |
| Track spacing / pitch | 1.6 $\mu$m | 0.74 $\mu$m | 0.34 $\mu$m | 0.3 $\mu$m/ 0.32 $\mu$m |
| Track format | Land/ groove Single spiral | Land/ groove Single spiral | Land/ groove Double spiral | Land/ grove Single spiral |
| Timing and tracking | Push-Pull in data track | Wobbling | Wobbling | ? |
| Typical wavelength | 780-790 nm | 635-650 nm | 405 nm | 405 nm |
| Typical NA | 0.45 | 0.6 | 0.65 | 0.85 |
| Min. spot diam. (FWHM) | 1.05 $\mu$m | 0.66 $\mu$m | 0.38 $\mu$m | 0.29 $\mu$m |
| Min. spot diameter $1/e^2$ | 1.6 $\mu$m | 1.1 $\mu$m | 0.62 $\mu$m | 0.5 $\mu$m |
| Depth of focus | 6.0 $\mu$m | 2.8 $\mu$m | 1.5 $\mu$m | 0.88 $\mu$m |
| Media thickness | 1.2 mm | 2x0.6 mm | 2x0.6 mm | 1.2 mm |
| Cover layer thickness | ~ 1.2 mm | ~ 0.6 mm | ~ 0.6 mm | 0.1 mm |
| Capacity 1 layer | 0.7 GB | 4.7 GB | 20 GB | 23.5/25/ 27 GB |

Table continued

| Topic | CD | DVD | HD DVD | Blu-ray Disk |
|---|---|---|---|---|
| Max. number of layers (per side) | 1 | 2 | 2 | ? |
| Capacity combined layers (per side) | 0.7 GB | 8.5 GB | 36 GB | ? |
| Nominal speed | 1.2-1.4 m/s | 3.49 m/s | ? | ? |
| Max. data rate (1x speed) | 1.536 Mb/s | 11.08 Mb/s | 36.55 Mb/ s | 36 Mb/s |
| Detection | Bit slicing | Bit slicing | PRML | ? |

Up to now, information was primarily stored on one single level on the recording medium. Only in the latest incarnations of the DVD and Blu-ray Disk media formats, multi-layer recording has been considered. In order to drastically increase the amount of data stored on one single medium, it is necessary to take advantage of the third dimension, since the storage density in the two-dimensional plane can be increased only marginally if a further reduction in the wavelength of the light employed for storage and readout is not possible. The currently utilized blue-laser technology seems to be at the edge of feasibility, both technically and economically. Furthermore, detector materials in the UV or even deep UV are currently unknown when it comes to monolithic integration with the whole signal-processing chain. But this tight integration would be necessary for mass-product market applications.

Using optical-coherence-tomography (OCT) techniques for optical data-storage applications has been considered in the past few years. For example, H.-J. Coufal and R.K. Grygier of IBM proposed in U.S. Patent No. 5,883,875 ("Short Coherent-Length Optical Tomograph for high Density Volume Optical Data Storage Devices") reading out multi-layered optical disks by using a setup very close to a traditional point-based OCT arrangement. The interferometry setup comprises a low-coherence (LC) light source, a beam splitter, a conventional intensity based detector array, a voice-coil actuated mirror and a phase modulator based on liquid crystals. It uses a single measurement beam in order to obtain read-back data sequentially from the storage medium.

In U.S. Patent No. 5,748,598, E.A. Swanson and S.R. Chinn proposed "Apparatus and Methods for Reading Multilayer Storage Media Using Short Coherence Length Sources". The approach taken is very close to the one presented in U.S. Patent No. 5,883,875 discussed above, but uses different low-coherence light sources such as a superluminescent diode or a rare-earth doped spontaneous-emission light source. Again, it is based on a point measurement approach and is not able to read out several layers simultaneously. However, one complete scan of the reference mirror in the interferometry setup reveals several layers.

The same authors E.A. Swanson and S.R. Chinn proposed "Apparatus and Methods for Accessing Data on Multilayered Optical Media" in U.S. Patent No. 5,784,352. The data-readout method described therein is based on a time-of-flight (TOF) device capable of reading out one layer at a time. The TOF device could be built in at least two different embodiments: the first and most obvious setup is a regular Michelson interferometer with variable path length to create several time delays. The second but non-interferometric approach is the so-called Mirau TOF device, which is based on optical time delays created by frequency-shifting the light carrier.

A frequency chirp is projected on the optical carrier, which in turn intensity modulates the received optical signal. A frequency detector can then be used to extract the pertinent information from the detected signal. When combining, e.g., the movable mirror of the former method with the frequency chirping of the latter method, simultaneous multi-layer or multi-location measurements can be implemented. With this approach, both reflectivity and polarization information are used to extract the stored data.

U.S. Patent No. 6,072,765 ("Optical Disk Readout Method Using Optical Coherence Tomography and Spectral Interferometry") by J.P. Rolland and P.J. Delfyett is the only approach of simultaneously reading out multiple data points known to date. The approach combines traditional OCT techniques with spectral interferometry. Otherwise it seems to be a standard point-based interferometry setup with a low-coherence light source, a beam splitter and a movable mirror to account for the optical path variations. The setup uses a combination of frequency-shifted light beams as well as a holographic lens in order to provide several focused light spots within the medium. Furthermore it needs several beam splitters at the respective distances to couple out the respective portion of light into one of several independent detectors cells.

Other publications are either in the field of optical data storage but not directly touching readout methods using OCT and similar techniques, or disclose OCT techniques that are not directly related to optical data storage applications.

In. the following, a brief summary of optical coherence tomography (OCT) is given before providing the details of the method and apparatus according to the present invention.

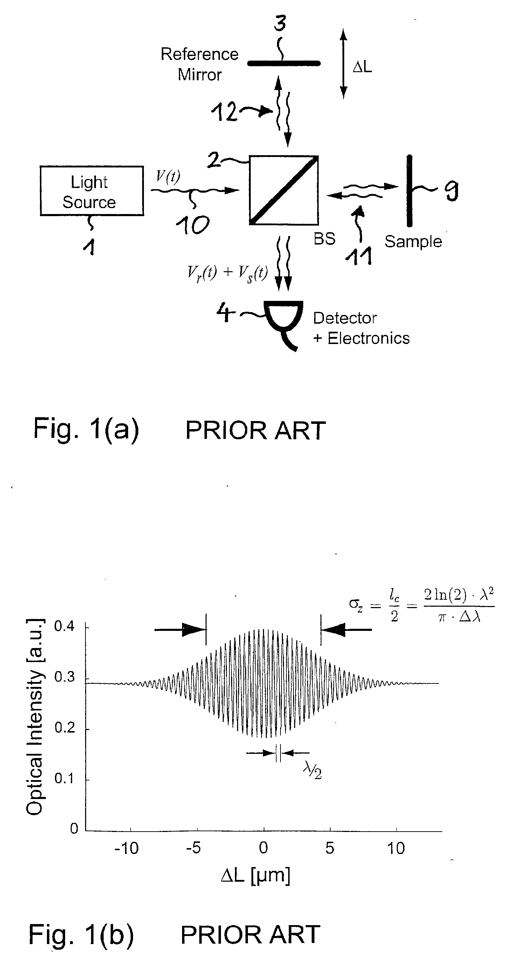

Optical coherence tomography is based on low-coherence interferometry. **Figure 1(a)** shows a setup of the well-known Michelson interferometer. A light beam 10 from an illumination source 1 is split into two paths 11, 12 by a beam splitter 2. In a sample path 11, the light is at least partially reflected by an inspected sample 9; in a reference path 12, a reference mirror 3 reflects the beam. The two beams are recombined in the beam splitter 2. At a photodetector 4, the incoming photons are converted into electrical charge carriers that are further analyzed by a detection electronics (not shown).

The following paragraph describes the theory leading to the optical intensity signal of a low-coherence interferogram shown in **Figure 1(b).** The complex wave function V(t) describes the light beam 10 of the illumination source 1 of the interferometer as a quasi-monochromatic wave:

$$V(t) = a(t)e^{i2\pi v_0 t} \quad ,$$

where $a(t)$ is the complex amplitude of the wave in the quasi-monochromatic case. The amplitude $a(t)$ is varying very slowly compared to the carrier frequency $v_0 = c/\lambda_0$. The intensity $I_0$ is defined as the time-averaged absolute square of the complex wave function V(t), i.e., given by

$$I_0 = \left\langle |V(t)|^2 \right\rangle = \left\langle |a(t)|^2 \right\rangle \quad .$$

The incident light wave 10 is split into the two branches 11, 12 of the interferometer and recombined later on. $V_r$ is the wave reflected by the scanning mirror 3, $V_s$ the one from the sample 9. The intensity measured by the photodetector 4 is given by

$$I_D(\tau) = \left\langle |V_r(t) + V_s(t)|^2 \right\rangle = \left\langle |s_r V(t+\tau) + s_s V(t)|^2 \right\rangle$$
$$= I_0 \cdot (s_r^2 + s_s^2) \cdot \left[ 1 + \frac{2 s_r s_s}{s_r^2 + s_s^2} \Re\{g(\tau)\} \right] \quad ,$$

where $\tau = 2\Delta l/c$ is the delay of the wave in the reference path 12 with respect to the wave in the sample path *11, $s_r$* and $s_s$ are the signal fractions on the photodetector 4 from the reference mirror 3 and the sample 9, respectively, and $\Re\{g(\tau)\}$ is the real part of the complex degree of temporal coherence $g(\tau)$, defined as the normalized autocorrelation function

$$g(\tau) = \frac{\left\langle V(t+\tau)V^*(t) \right\rangle}{I_0} = |g(t)| \cdot e^{i\varphi_g(\tau)} \cdot e^{i2\pi v_0 \tau} \quad ,$$

where the autocorrelation phase $\varphi_g(\tau)$ varies very slowly compared to $2\pi v\tau$. The detected intensity finally becomes

$$I_D(\tau) = I_0 \cdot (s_r^2 + s_s^2) \cdot \left[ 1 + \frac{2 s_r s_s}{s_r^2 + s_s^2} \cdot |g(t)| \cdot \cos(\varphi_g(\tau) + 2\pi v_0 \tau) \right] \quad ,$$
$$= I_{0D} \cdot (1 + \Gamma(\tau)\cos(\varphi_g(\tau) + 2\pi v_0 \tau))$$

where $\Gamma(\tau)$ is the interference fringe visibility. For a semitransparent sample 9 with several reflecting interfaces, interference fringes are detected for each of them. The envelope amplitude of the optical signal is proportional to the power reflectance of the detected interface. For a light source exhibiting a Gaussian spectrum, $|g(t)|$ is a Gaussian function with a full width at half maximum (FWHM) corresponding to the coherence length. The axial resolution $\sigma_z$ of an OCT system is defined as the minimum distance in the scan direction between two reflecting sites at which they still can be distinguished; it is fined as half of the coherence length $l_c$:

$$\sigma_z = \frac{l_c}{2} = \frac{2\ln 2}{\pi} \cdot \frac{\lambda^2}{\Delta\lambda} \qquad .$$

Most OCT systems use heterodyne detection, i.e., the reference mirror 3 is scanned at a constant speed v. By doing this, the detected intensity signal $I_D(\tau)$ is modulated by a frequency $f_D=2v/\lambda_0$, the so-called Doppler frequency.

Detecting and evaluating the modulation signal $I_D(\tau)$ can be done in various ways. When using conventional intensity-sensitive photodetectors, each period of the interference pattern has to be sampled with at least three data points, although the actual information is basically incorporated only in the envelope of the interference pattern. Although feasible, this approach heavily limits the achievable scan speed of the overall system since for every data point in the xy plane, a full depth scan has to be accomplished in order to obtain the entire volumetric three-dimentional information. A much more effective approach to this problem is the use of smart-pixel sensors (cf. Beer et al., "Smart Pixels for Real-time Optical Coherence Tomography", SPIE Photonics West 2004). According to this approach, each pixel of the sensor array comprises an internal demodulator, time-averaging means and low-pass filtering means in order to reduce the transferred data to a minimum already very early in the signal chain since only the envelope of the wave packets contains useful information on the investigated sample.

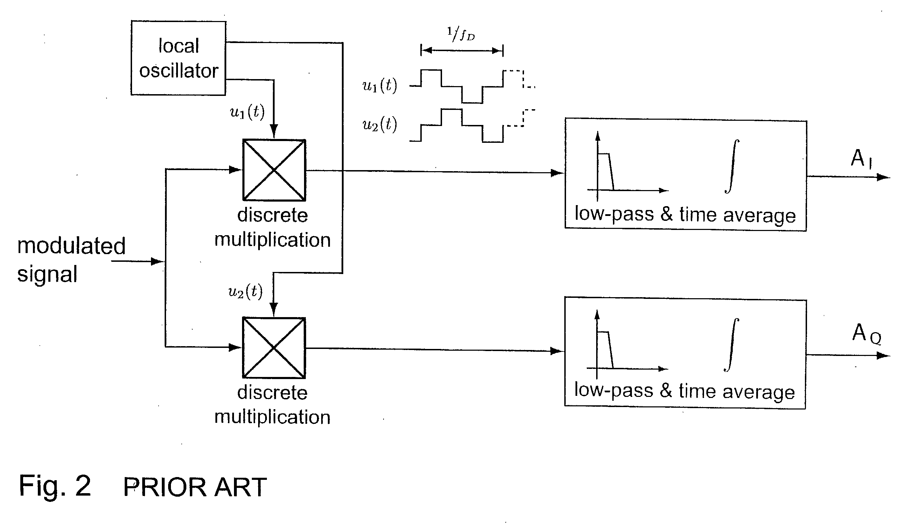

**Figure 2** outlines a block diagram of a smart-pixel circuit capable of in-pixel signal processing. The output of each pixel is a time-discrete signal of the demodulated in-phase and quadrature information of the signal envelope. By employing the advanced signal-processing scheme, a data reduction of at least one to two orders of magnitude can be achieved, compared to the conventional intensity-sensing based approach. When using two-dimensional array sensors consisting of such smart demodulation pixels, the entire volumetric picture of a material sample can be obtained in real time with only one depth scan.

Present readout schemes for optical data storage devices are based on a sequential process: data points are read in a serial manner from a rotating disk. Hence the bit rate has to be very high in order to achieve reasonable read times of an entire disk. A parallel readout scheme could increase the data throughput significantly. The parallelism can be introduced either by reading several layers in parallel or by reading data on several locations on the disk. The first approach has the clear advantage that the data can still be encoded in sequential manner within a single storage layer, i.e., maintaining the spiral filing of the individual data bits. However, for next-generation optical storage devices, one could also place data on several interspersed spiral storage locations and hence enable the parallelism on a single storage layer. In the following, the various methods of achieving parallelism in readout schemes for optical data storage are outlined and explained.

In order to increase the lateral data density on an optical data storage medium, the next-generation optical data-storage technologies will employ light sources going more and more into the blue, violet or even UV range of the electromagnetic spectrum. This is necessary to minimize the size of the optical spot on the storage medium. This means that the optical imaging system will need optics with a large numerical aperture NA. However, this also means that the depth of focus within the medium will be very limited. The relationship between the numerical aperture NA and the depth of focus $\Delta z$ is approximately given by

$$\Delta z \approx \frac{\pi \cdot \lambda}{2 \cdot NA^2} \qquad .$$

The above observation leads to the conclusion that it will be very difficult to achieve focusing within more than one storage layer when employing planar optical sensor arrays.

SUMMARY OF THE INVENTION

Traditional optical data-storage readout schemes access one single storage layer at the time by actively focusing an interferometer setup using laser light sources to said layer and scanning the rotational medium in a spiral manner. This approach seems to be suitable for media comprising one or two storage layers. However, if many more storage layers are considered, the reflected optical signal gets weaker in an exponential manner. This brought researchers to the idea to use low-coherence light sources such as light-emitting diodes (LEDs) and super-luminescent diodes (SLDs) instead of laser light sources in order to access the storage medium by the so-called optical-coherence-tomography (OCT) method. By doing so, a large number of storage layers may be accessed. But since a complete depth scan in the z axis is necessary for each data point on the various storage layers, this method seems to be limited in terms of achievable data rate.

This reasoning is the starting point for the present invention, which aims at dramatically improving the efficiency of the information reconstruction from such multi-layer optical data storage media.

This problem and other problems are solved by the method and the apparatus as defined in the independent claims. Advantageous embodiments of the invention are given in the dependent claims.

When placed correctly in the three-dimentional space, a one-dimensional or two-dimensional smart-pixel sensor array dedicated to the parallel OCT technique can access many storage layers in parallel without sacrificing overall data rate. Compared to other readout approaches in optical data storage applications that already proposed to use optical coherence tomography (OCT) and similar techniques, the novelty of the present invention can be found in the fact that a larger region of the data storage medium is illuminated using a homogenously collimated light beam and that multiple data points within this region are simultaneously read out using one single smart multi-pixel sensor array. The measurement points can be within one or several different optical storage layers.

The core of the apparatus according to the present invention is a dedicated interferometer setup. Several data points of a multi-layer data-storage medium or disk can be read out simultaneously by illuminating a specific lateral region of the medium homogeneously. The readout of the data points in question is enabled by the local interference phenomenon employed in the OCT technique. Hereby, a time-varying interference pattern of the recombined light signal from the data storage medium and a scanning reference mirror, respectively, is evaluated in a smart-pixel OCT sensor array. The smart pixels of the sensor array may each comprise a circuit capable of in-pixel signal processing, in particular of signal demodulation, such as shown in Fig. 2. Said data points may lay in one single layer or in several different layers of the data storage medium depending on the angle of said data storage medium and the optical path of the illumination as well as the imaging optics to the smart multi-pixel OCT sensor. Another setup possibility consists in placing the data storage medium horizontally and inclining the sensor array itself. By using a low-coherence light source in the readout data path, interference signals are only created at exactly one storage depth and hence separate the various storage layers very efficiently.

The inventive method for reading data from a storage device, on which storage device the data are digitally stored in the form of data points arranged on at least two parallel layers having a spacing, comprises the steps of:

generating a low-coherence light beam with a coherence length that is of the order of or less than the layer spacing,
splitting the light beam into a first and a second portion,
illuminating the storage device with the first portion,
reflecting at least part of the first portion from the storage device,
combining light reflected from the storage device with the second portion to form an interference signal, and
detecting the interference signal.

A lateral region of the storage device extending in at least one lateral dimension over a plurality of data points is essentially homogeneously illuminated,
the lateral region is imaged onto a sensor array with a plurality of pixels, and
interference signals corresponding to data points in the lateral region are detected by means of the sensor array.

The inventive apparatus for reading data from a storage device, on which storage device the data are digitally stored in the form of data points arranged on at least two parallel layers having a spacing, comprises:

a low-coherence light source for generating a light beam with a coherence length that is of the order of or less than the layer spacing,
means for splitting the light beam into a first and a second portion,
means for directing the first portion towards the storage device,
means for combining light reflected from the storage device with the second portion to form an interference signal,
detector means for detecting the interference signal,
collimating optics for essentially homogeneously illuminating a lateral region of the storage device extending in at least one lateral dimension over a plurality of data points,
a sensor array with a plurality of pixels as detector means, and
imaging optics for imaging the lateral region onto the sensor array.

Due to the use of dedicated smart-pixel image sensors, several hundreds of layers may be accessed in parallel at the same time. By using either a one-dimensional or two-dimensional smart-pixel sensor array in the optical data path, the approach of the present invention is much more efficient compared to the traditional OCT approach and provides real parallel data readout instead of an accumulation of several parallel single-spot OCT measurements.

The problem of the limited depth of focus $\Delta z$ is overcome by inclining the storage medium or the sensor in order to achieve focus within more than one storage layer. Inclining the storage medium is reasonably well feasible only with fixed or linearly activated storage media, but not with rotational media. This is due to the fact that the distance from the storage medium to the imaging optics would need a constant adaptation. The solution with an inclined sensor is also suited for rotational disks. Hence parallel readout schemes for multi-layered optical data-storage devices using inclined smart-pixel pOCT sensors seem to be advantageous.

A first natural approach to increase the parallelism in the readout path of an optical data-storage device is the use of a one-dimensional sensor array where each of the pixels is reading only one spiraled data track. Although this would be principally possible with any interferometric readout scheme, OCT is a preferred approach in multi-layered optical data storage technologies as has been outlined before. Hence, the use of smart-pixel optical-sensor arrays is clearly preferred for this approach.

BRIEF DESCRIPTION OF THE DRAWINGS

Embodiments of the invention and some OCT setup elements according to the prior art, that can also be used in the invention, are described in greater detail hereinafter relative to the attached schematic drawings.

Figure 1    shows (a) a Michelson interferometer for use in low-coherence interferometry, and (b) a low-coherence interferogram, as known from the prior art.

Figure 2    shows a block diagram of a smart-pixel-architecture circuit capable of in-pixel signal processing as known from the prior art.

Figure 3    shows a first embodiment of the apparatus according to the invention.

Figure 4    shows an interferometer setup for use in the apparatus according to the invention.

Figure 5    shows part of a second embodiment of the apparatus according to the invention.

Figure 6    shows the traces of imaging rays in two embodiments of the apparatus according to the invention.

Figure 7    shows four arrangements of sensor arrays for use in the apparatus according to the invention.

DESCRIPTION OF PREFERRED EMBODIMENTS

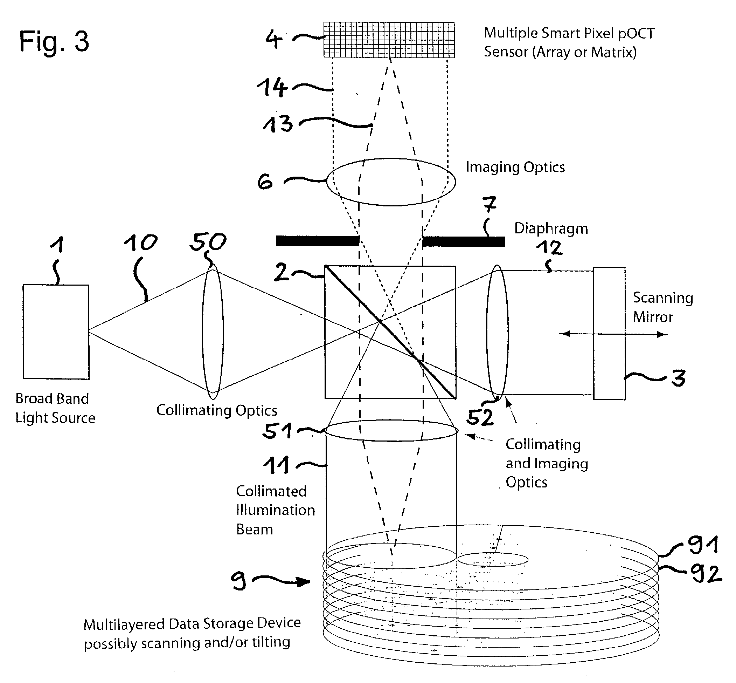

**Figure 3** shows an apparatus according to the invention. All embodiments of the apparatus share a common part, which is a special interferometer setup. The central part of this setup consists of a beam splitter 2 that splits and recombines two light beams 11, 12 that follow different optical paths. A light source 1, a scanning reference mirror 3, a sample 9 of interest and a smart-pixel OCT sensor array 4 in each of the four plane directions surround the beam splitter 2. The sample 9 is typically an optical storage disk with a plurality of storage layers 91, 92, .... A broadband light source 1 emitting light 10 of short coherence length is needed to scan the sample 9. The broadband light source 1 can be, for instance, a light-emitting diode (LED), a super-luminescent diode (SLD), a vertical-cavity surface-emitting laser (VCSEL), a discharge lamp or a glow lamp. The light 10 of the broadband light source 1 is collimated by dedicated optical devices 50, 51, 52, which also allow scaling the diameter of the illuminating beam 10 up or down. An optional spatial filter (not shown) can be added for specific applications in order to reduce spatial incoherence of the light. The last lens 51, 52 of the collimating optics is needed twice identically. These two last collimating lenses 51, 52 are placed behind the beam splitter 2 in the direction of each light path 11, 12, in order to collimate the two identical beams 11, 12 when hitting the sample 9 and the reference mirror 3, respectively. The more homogeneous the illumination of the sample 9, the better the signal-to-noise ratio (SNR), since quick changes in the spatial light intensity lead the OCT sensor 4 to consider a modulation. Also for this reason, possible diffractions of the emitting light source 1 leading to circles of different light intensities on the sample 9 have to be filtered away.

An additional, imaging lens 6 is needed in the light path 13 between the beam splitter 2 and the OCT sensor 4 in order to provide an image of a lateral region of interest of the sample 9 on the OCT sensor 4. This image can be scaled in either direction or can also be of identical size as the lateral sample region, depending on the needs of lateral resolution as well as chip size and beam diameter. Another crucial factor for the choice of the scaling factor is the need for a certain amount of photons falling onto each pixel in order to provide a reasonable SNR at the sensor level. Hence, the intensity of the light source 1 and the final diameter of the beam lead to the specific intensity that has to be considered when choosing the scaling factor. The imaging properties of the lenses 51, 52, 6 between the sample 9 and the OCT sensor 4 as well as between the reference mirror 3 and the sensor 4 guarantee that the light beam 13 reflected by the sample 9 forms an image of the sample 9 on the sensor 4 and that the light beam 14 reflected by the reference mirror 3 is collimated when hitting the sensor 4. A diaphragm 7 between beam splitter 2 and sensor 4 reduces the numerical aperture of the imaging lens 6 in order to adjust the speckle size to the smart-pixel size.

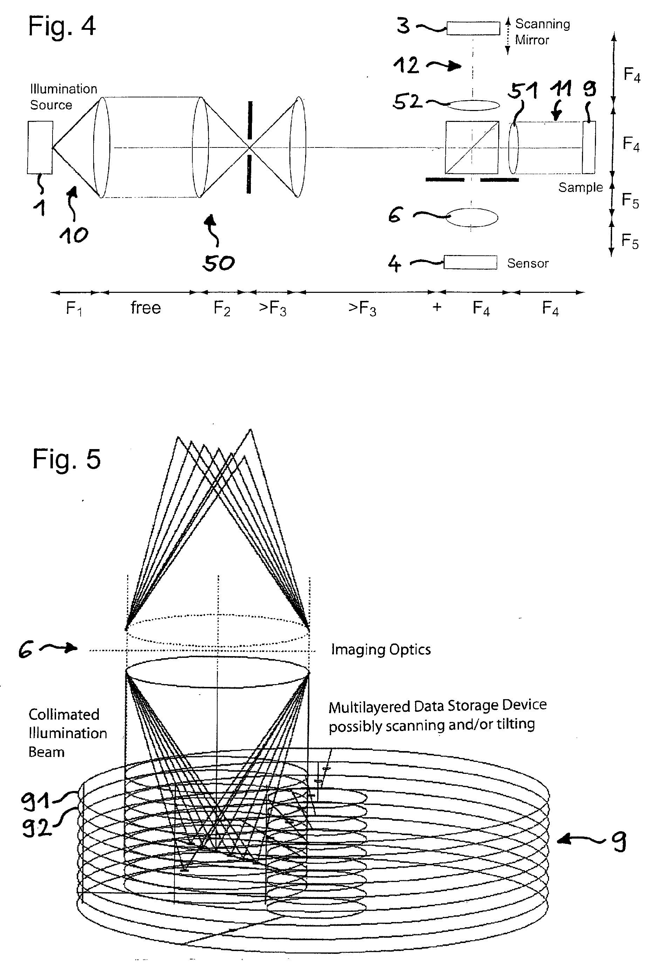

**Figure 4** depicts the relationship between the various optical elements in the interferometer setup, which are necessary in order to achieve proper functionality of the system. The collimating optics has to be configured accurately in order to provide a homogeneous, spatially coherent collimated beam that illuminates both the sample 9 and the scanning mirror 3. The imaging optics has to be configured so as to accurately image the sample 9 to the OCT image sensor 4. The lateral amplification of the image and the numerical aperture have to be chosen carefully with regards to the specific application.

Since the general focus is achieved by an independent servo loop, the scanning mirror 3 of the OCT setup needs to be displaced theoretically only in a very small range in the order of a few micrometers. In a practical setup, this scan range has to be increased in order to compensate for interlayer variations. The maximum of the scan range will be at one distance between two storage layers. This very limited scan range enables the use of piezoelectric scan elements, which can be operated very fast and hence enable a high data throughput of the complete system.

The scanning reference mirror 3 is required to move without any significant tilt angle. Furthermore, it has to move at a very constant speed in both directions, back and forth. The requirements for such a scanner have to be reached very accurately in order for the smart OCT sensor 4 to demodulate the correct signal provided by the temporally interfering light (Doppler frequency). The path of the scanning stage 3 can be chosen depending on the region of interest in depth to be scanned at once. However, the depth of focus of the imaging optics, depending on the numerical aperture, is not negligible. If the sample 9 itself can be shifted in the z direction, this method provides better results since the numerical aperture can be chosen small providing a more accurate image of only the sample layer being actually measured.

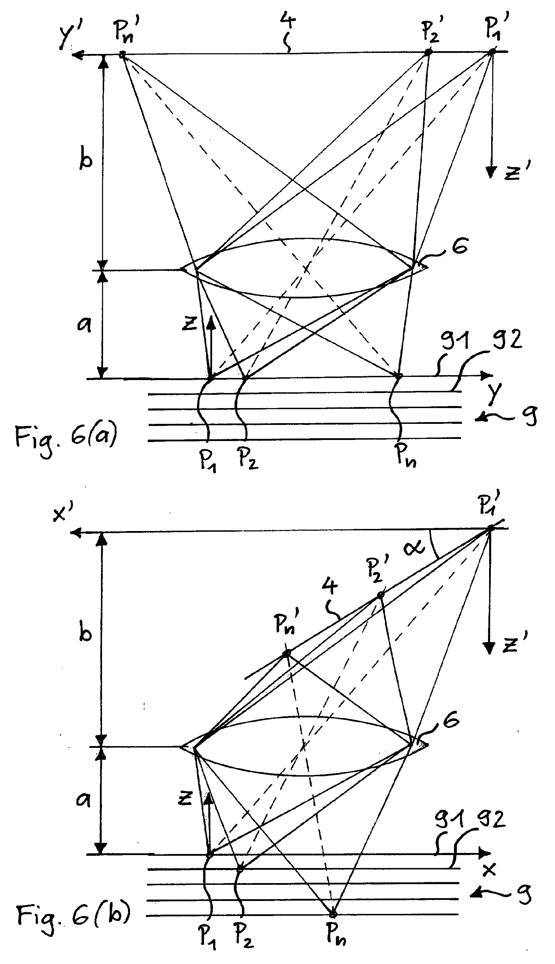

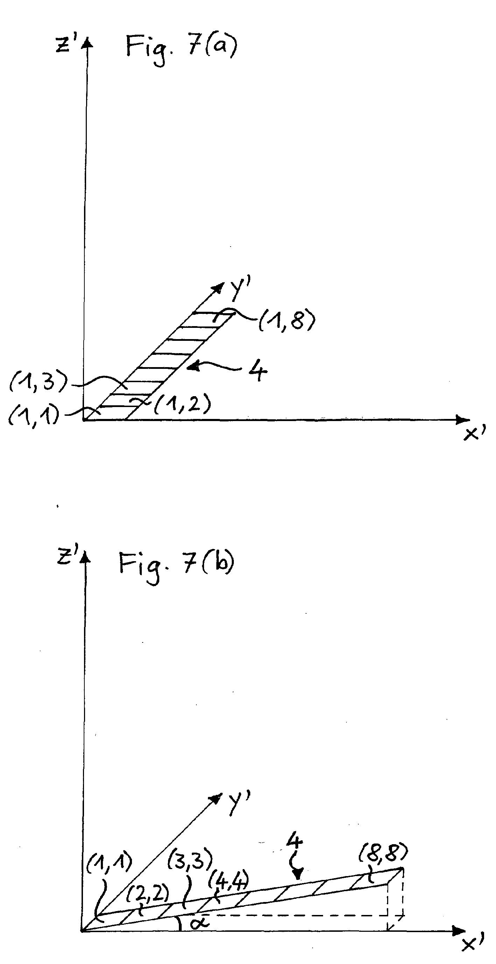

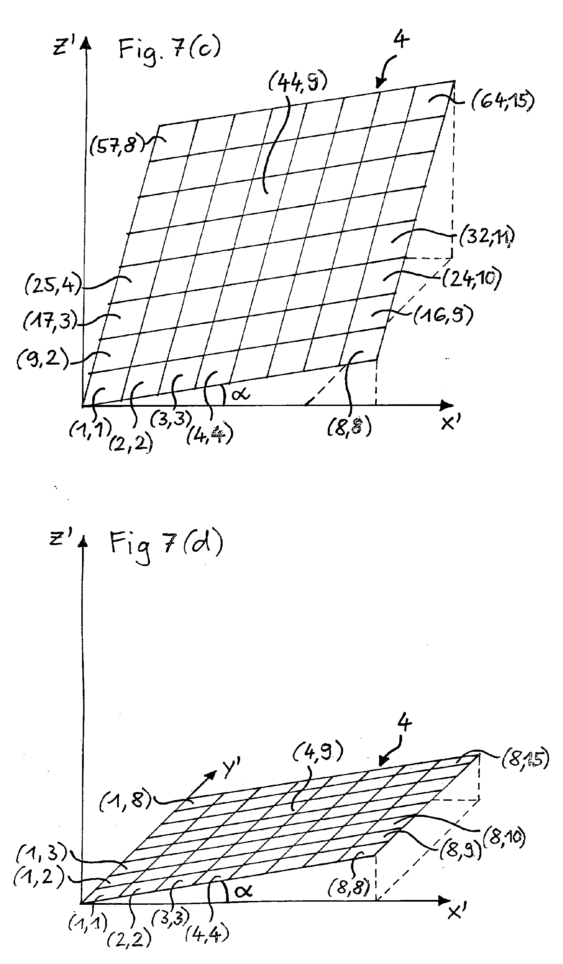

In the embodiment shown in Fig. 3, the sensor array 4 is inserted perpendicular to the optical branch in the interferometer setup, i.e., parallel to the image planes of the disk layers 91, 92, .... This situation is schematically illustrated in **Figure 6(a)** (cf. also Figure 7(a)). A plurality of data points $P_1$, $P_2$, ..., $P_n$, arranged on a plurality of tracks on a single layer 91 of the sample 9, is imaged by an imaging system 6 with a focal length f onto image points $P_1'$, $P_2'$, ..., $P_n'$ in the image plane. Each image point $P_1'$, $P_2'$, ..., $P_n'$ preferably corresponds to a pixel of the sensor array 4. The Cartesian coordinates of the layer 91 are designated with x, y and z, whereas the Cartesian coordinates of the image plane and the sensor 4 are designated with x', y' and z'. The well-known imaging equation

$$\frac{1}{f} = \frac{1}{a} + \frac{1}{b}$$

applies. The lateral amplification is

$$\frac{\overline{P_1'P_2'}}{\overline{P_1P_2}} = \frac{b}{a} \quad .$$

The imaging optics 6 is drawn in Fig. 6 as a simple lens, but may be more complex. The sample 9, a multilayered data-storage medium, can be mounted fix, rotating and/or scanning in the direction of the light and/or tilting in order to image a layer of interest onto the sensor 4 by means of the imaging optics 6. The depth of focus has to be adapted to each layer 91, 92, ... with a servo mechanism that is very similar to the traditional approaches used for known systems such as CD, DVD or Blu-ray Disk.

The same one-dimensional sensor array 4 as described with reference to Figs. 3 and 6(a) can be used when inclined by an angle α with respect to a radial direction x' of the disk image. This situation is schematically illustrated in **Figures 5 and 6(b)** (cf. also Figure 7(b)). The angle α depends on various parameters such as pixel size, layer spacing and lateral amplification, and may lie in a wide range between a small fraction of a dgree up to a few tens of degrees. In the embodiment of Figs. 5 and 6(b), each layer 91, 92, ... of the disk 9 is imaged exactly onto one pixel of the sensor array 4. Since the pixels of the dedicated pOCT sensor array 4 are comparatively large, this method is limited to a number of layers 91, 92, ... which is typically smaller than 20 or 30. This is due to the fact that the imaging optics 6 has to be such that two adjacent pixels, onto which two adjacent layers 91, 92 are imaged, are spaced exactly by one period of the spiral. When employing too many pixels in one direction, the difference in tangential speed between the various tracks becomes too important and hence an accurate speed control is not possible anymore. Furthermore, if one puts too many pixels in one direction, there will be a variation in storage capacity from layer to layer, which again is not desired.

A method to circumvent this problem can be found when using a two-dimensional smart-pixel sensor array 4 that is inclined in two directions (cf. Fig. 7(c)): the inclination with respect to a first direction (called x' direction) is chosen according to the distance between two adjacent storage layers 91, 92. The inclination with respect to a second direction (called y' direction) is chosen according to the number n of pixels in the x direction, such that the first n layers are imaged on the n pixels of the first sensor row, the next n layers are imaged on the n pixels of the second sensor row, etc. This approach helps limiting the tangential speed variations and at the same time enables the readout of several dozens of layers 91, 92, .... More advanced silicon technologies will enable the design of smaller sensors 4 and hence enable the application of this method to storage media 9 with more than 100 storage layers 91, 92, ....

When dealing with a relatively small number of storage layers 91, 92, ..., one can still use a two-dimensional smart-pixel array 4 in order to increase the data throughput in optical data-storage applications. In this case, the sensor 4 is only inclined with respect to the direction formerly called x', while maintaining a perpendicular alignment with respect to the imaging beam in the y' direction (cf. Fig. 7(d)). This enables the parallel readout of several tracks in parallel within one layer while still accessing several layers in parallel.

Preferred embodiments of the invention are described hereinafter with reference to **Figures 7(a)-(d).** In these drawings, a one- or two-dimensional sensor array 4 for use in four embodiments of the apparatus according to the invention is schematically shown. The sensor array 4 is arranged in four different ways in a Cartesian coordinate system (x', y', z'). In this coordinate system (x', y', z'), the z' axis is parallel to the axis of the incident light beam 13, whereas the x' and y' axes define a plane perpendicular to the incident light beam 13, i.e., a plane parallel to the image of the layers 91, 92, ... of the storage medium 9. Each pixel of the sensor array 4 is identified by a pair (L, T) of integers L, T, wherein L denotes the number of the layer and T the number of the track imaged onto the pixel. The numbering is only relative, i.e., L = 1 or T = 1 does not necessarily mean that the first layer of the optical medium 9 or the first track of a certain layer, respectively, is imaged onto the corresponding pixel. For the sake of clarity, the exemplary sensor array 4 has 8 or 64 pixels; of course, sensor arrays 4 with a higher or lower number of pixels in both directions x', y' can be used.

A first preferred embodiment of the apparatus for efficiently accessing data on a multi-layered optical data-storage medium 9 is shown in **Figure 7(a)** (cf. also Fig. 6(a)) In this first embodiment, the interferometer setup as described with reference to Figs. 3 and 4 is completed by a one-dimensional sensor array 4 covering a region of interest that is perpendicular to the scan direction, i.e., radial with respect to the rotating storage medium 9. The sensor array 4 is mounted perpendicularly to the incident light beam, i.e., lies in the (x',y') plane, e.g., parallel to the y' direction. This allows the readout of several interspersed tracks T = 1, 2, ..., 8 within one single storage layer L = 1. The imaging lens closest to the storage medium has to track the distance to the storage medium 9 by a servo mechanism, which ensures the correct focus of the collimated light beam in the imaging area. The scanning mirror 3 oscillates around its idle state with an amplitude of only a few micrometers, while still simultaneously being able to track the variations imposed by the focusing mechanism.

Further preferred embodiments comprise the following characteristics:

- Use of a one-dimensional sensor array tilted with respect to a radial direction x' of the disk image with an angle $\alpha$ matching the spacing between the layers; cf. **Figure 7(b)** and **Figure 6(b).** The scanning mirror is operated in the same way as in the embodiment described above. A parallel readout of several layers L = 1, 2, ..., 8, wherein one track per layer is read out, is possible.

- Use of a two-dimensional sensor array tilted with respect to both directions x', y' of the image plane; cf. **Figure 7(c).** The scanning mirror is operated in the same way as in the embodiment described above. A parallel readout of several layers L = 1, 2, ..., 64, wherein one track per layer is read out, is possible.

- Use of a two-dimensional sensor array tilted with respect to only one direction x' with the aim of a parallel readout in the plane where no tilt is applied; cf. **Figure 7(d).** The scanning mirror is operated in the same way as in the embodiment described above. A parallel readout of several layers L = 1, 2, ..., 8, wherein several tracks per layer are read out, is possible. This embodiment can be interpreted as a combination of the embodiments of Figs. 7(a) and 7(b).

- Use of a one-dimensional sensor array without any tilt. The storage medium is tilted at an angle corresponding to the spacing between the storage layers. This embodiment is, mutatis mutandis, analogous to that of Figs. 7(b) and 6(b). The scanning mirror is operated in the same way as in the embodiment described above. A parallel readout of several layers is possible.

- Use of a two-dimensional sensor array without any tilt. The storage medium is tilted at an angle corresponding to the spacing between the storage layers. This embodiment is, mutatis mutandis, analogous to that of Fig. 7(d). The scanning mirror is operated in the same way as in the embodiment described above. A parallel readout of several layers within several tracks is possible.

- Use of a one-dimensional sensor array tilted with respect to one direction x' with angle $\alpha$ corresponding to the spacing between the storage layers; cf. **Figure 7(b)** and **Figure 6(b).** The mirror in the reference path does not perform any scanning movement. The storage medium is moved with a slight scanning movement around the storage layer in order to create proper interference patterns. A parallel readout of several layers is possible.

- Use of a two-dimensional sensor array tilted with respect to one direction x' with angle corresponding to the spacing between the storage layers; cf. **Figure 7(d).** The mirror in the reference path does not perform any scanning movement. The storage medium is moved with a slight scanning movement around the storage layer in order to create proper interference patterns. A parallel readout of several layers with several tracks is possible.

The detection principle described with reference to the latter two embodiments may be used not only for reading data from an optical storage device, but also for three-dimensional data and/or image acquisition in other technical fields, such as industrial quality control.

In all embodiments, the reference mirror 3 may be arranged perpendicular with respect to the axis of the light impinging on it, or may be tilted with respect to the axis. It may be plane or structured in the dimension of the light axis, e.g., have a step-like reflecting surface. Such a stepped reference mirror for use in optical tomography is described in U.S. Patent No. 6,268,921 ("Interferometric device for recording the depth optical reflection and/or transmission characteristics of an object").

This invention is not limited to the preferred embodiments described above, to which variations and improvements may be made, without departing from the scope of protection of the present patent.

LIST OF REFERENCE SIGNS

| 1 | Light source |
|---|---|
| 10 | Emitted light |
| 11 | Measuring light portion |
| 12 | Reference light portion |
| 13 | Light incident onto sensor array |

2    Beam splitter

3    Reference mirror

4    Sensor array

50-52    Collimating optics

6    Imaging optics

9        Storage device
91, 92, ...    Layers of storage device

x, y, z    Cartesian coordinates of storage device
x', y', z'    Cartesian coordinates in imaging plane

**Claims**

1. A method for reading data from an optical storage device (9), on which storage device (9) the data are digitally stored in the form of data points arranged on at least two parallel layers (91, 92, ...) having a spacing, comprising the steps of:

   generating a low-coherence light beam (10) with a coherence length that is of the order of or less than the layer spacing,
   splitting the light beam (10) into a first (11) and a second (12) portion,
   illuminating the storage device (9) with the first portion (11),
   reflecting at least part of the first portion (11) from the storage device (9),
   combining light reflected from the storage device (9) with the second portion (12) to form an interference signal, and
   detecting the interference signal,
   **characterized in that**

a lateral region of the storage device extending in at least one lateral dimension over a plurality of data points is essentially homogeneously illuminated,

the lateral region is imaged onto a sensor array (4) with a plurality of pixels, and

interference signals corresponding to data points in the lateral region are detected by means of the sensor array (4).

2. The method according to claim 1, wherein data points arranged on several tracks of one single layer (91) are imaged onto the sensor array (4).

3. The method according to claim 2, wherein the sensor array (4) is a one-dimensional sensor array and two adjacent tracks of the layer (91) are imaged onto two adjacent pixels of the sensor array (4).

4. The method according to claim 1, wherein data points arranged on several layers (91, 92, ...) are imaged onto the sensor array (4).

5. The method according to claim 4, wherein the sensor array (4) is a one-dimensional sensor array and two adjacent layers (91, 92) are imaged onto two adjacent pixels of the sensor array (4).

6. The method according to claim 4, wherein the sensor array (4) is a two-dimensional sensor array and two adjacent layers (91, 92) are imaged onto two pixels adjacent in one dimension of the sensor array (4).

7. The method according to claim 6, wherein two adjacent tracks of a layer (91) are imaged onto two pixels adjacent in the other dimension of the sensor array (4).

8. The method according to any of the preceding claims, wherein the optical path of the first (11) and/or second (12) portion of the light beam is changed periodically in time such that in each period, various interference signals are formed by light reflected from various layers (91, 92, ...) .

9. The method according to claim 8, wherein the change in optical path is effected in the first portion (11) of the light beam by periodically moving the storage device (9).

10. The method according to claim 8 or 9, wherein the change in optical path is effected in the second portion (12) of the light beam by periodically moving a scanning mirror (3) from which the second portion (12) is reflected.

11. The method according to any of the preceding claims, wherein the interference signal is at least partly processed in each pixel of the sensor array (4), and in particular, signal demodulation is performed in each pixel of the sensor array (4).

12. An apparatus for reading data from an optical storage device (9), on which storage device (9) the data are digitally stored in the form of data points arranged on at least two parallel layers (91, 92, ...) having a spacing, comprising:

a low-coherence light source (1) for generating a light beam (10) with a coherence length that is of the order of or less than the layer spacing,

means (2) for splitting the light beam (10) into a first (11) and a second (12) portion,

means (2) for directing the first portion (11) towards the storage device (9),

means (2) for combining light reflected from the storage device (9) with the second portion (12) to form an interference signal, and

detector means (4) for detecting the interference signal,

**characterized by**

collimating optics (50-52) for essentially homogeneously illuminating a lateral region of the storage device (9) extending in at least one lateral dimension over a plurality of data points,

a sensor array (4) with a plurality of pixels as detector means and

imaging optics (6) for imaging the lateral region onto the sensor array (4).

13. The apparatus according to claim 12, wherein the sensor array (4) is a one-dimensional sensor array, and the sensor array (4) and the storage device (9) are positioned with respect to the imaging optics (6) such that data points arranged on several tracks of one single layer (91) are imaged onto the sensor array (4), and preferably two adjacent tracks of the layer (91) are imaged onto two adjacent pixels of the sensor array (4).

14. The apparatus according to claim 12, wherein the sensor array (4) is a one-dimensional sensor array, and the sensor array (4) and the storage device (9) are positioned with respect to the imaging optics (6) such that data points arranged on several layers (91, 92, ...) are imaged onto the sensor array (4), and preferably two adjacent layers (91, 92) are imaged onto two adjacent pixels of the sensor array (4).

15. The apparatus according to claim 12, wherein the sensor array (4) is a two-dimensional sensor array, and the sensor array (4) and the storage device (9) are positioned with respect to the imaging optics (6) such that data points arranged on several layers (91, 92, ...) are imaged onto the sensor array (4), and preferably two adjacent layers (91, 92) are imaged onto two pixels adjacent in one dimension of the sensor array (4).

16. The apparatus according to claim 15, wherein the sensor array (4) and the storage device (9) are positioned with respect to the imaging optics (6) such that two adjacent layers (91, 92) are imaged onto two pixels adjacent in one dimension of the sensor array (4) and two adjacent tracks of a layer (91) are imaged onto two pixels adjacent in the other dimension of the sensor array (4).

17. The apparatus according to any of the claims 12-16, further comprising scanning means (3) for changing periodically in time the optical path of the first (11) and/or second (12) portion of the light beam.

18. The apparatus according to claim 17, wherein the scanning means (3) comprise means for periodically moving the storage device (9) and/or a scanning mirror (3) from which the second portion (12) of the light beam is reflected.

19. The apparatus according to any of the claims 12-18, wherein each pixel of the sensor array (4) comprises an electronic circuit for at least partly processing the interference signal.

20. The apparatus according to any of the claims 12-19, wherein the low-coherence light source (1) is selected from the goup consising of a light-emitting diode, a super-luminescent light-emitting diode, a vertical-cavity surface-emitting laser, a discahrge lamp and a glow lamp.

21. The apparatus according to any of the claims 12-20, wherein the apparatus comprises an interferometer, preferably a Michelson interferometer.

Fig. 1(a)    PRIOR ART

$$\sigma_z = \frac{l_c}{2} = \frac{2\ln(2) \cdot \lambda^2}{\pi \cdot \Delta\lambda}$$

Fig. 1(b)    PRIOR ART

Fig. 2 PRIOR ART

# Fig. 3

Multiple Smart Pixel pOCT Sensor (Array or Matrix) — 4

14

13

Imaging Optics — 6

Diaphragm — 7

12

Broad Band Light Source — 1

Collimating Optics — 10

50

2

Scanning Mirror — 3

52

Collimating and Imaging Optics

Collimated Illumination Beam — 51, 11

Multilayered Data Storage Device possibly scanning and/or tilting — 9

91

92

EP 1 624 450 A1

## Fig. 4

Illumination
Source

3 — Scanning Mirror

12 →

52 —

51  11  9

F4

F4

Sample

F5

F5

6 —

4 — Sensor

1

10

50

$F_1$   free   $F_2$   $>F_3$   $>F_3$   $+$   $F_4$   $F_4$

## Fig. 5

6 →

Imaging Optics

Collimated
Illumination
Beam

Multilayered Data Storage Device
possibly scanning and/or tilting

91

92

9

Fig. 6(a)

Fig. 6(b)

Fig. 7(a)

Fig. 7(b)

Fig. 7(c)

Fig 7(d)

**European Patent Office**

**EUROPEAN SEARCH REPORT**

Application Number

EP 04 40 5502

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | S. BEER ET AL.: "Smart Pixels for Real-time Optical Coherence Tomography" SPIE, DIGITAL PROCEEDINGS PAPERS, vol. 5302, 1 April 2004 (2004-04-01), pages 21-32, XP002322148 CA, USA * the whole document * | 1,4,6,8, 10,12, 15,17, 18,20,21 | G11B7/00 |
| Y | US 6 072 765 A (ROLLAND ET AL) 6 June 2000 (2000-06-06)  * column 2, line 50 - column 6, line 33; figures * | 1,4,6,8, 10,12, 15,17, 18,20,21 | |
| A | WO 03/062802 A (THE GENERAL HOSPITAL CORPORATION; DE BOER, JOHANNES, FITZGERALD; TEARN) 31 July 2003 (2003-07-31) * page 6, line 10 - page 35, line 26; figures * | 1-21 | |
| A | SEITZ P: "Smart pixels" ELECTRON DEVICES FOR MICROWAVE AND OPTOELECTRONIC APPLICATIONS, 2001 INTERNATIONAL SYMPOSIUM ON 15-16 NOV 2001, PISCATAWAY, NJ, USA,IEEE, 15 November 2001 (2001-11-15), pages 229-234, XP010570425 ISBN: 0-7803-7049-X * the whole document * | 1-21 | TECHNICAL FIELDS SEARCHED (Int.Cl.7) G11B |
| A | US 5 784 352 A (SWANSON ET AL) 21 July 1998 (1998-07-21) * column 3, line 25 - column 13, line 9; figures * | 1-21 | |

The present search report has been drawn up for all claims

| Place of search | Date of completion of the search | Examiner |
|---|---|---|
| The Hague | 23 March 2005 | Geoghegan, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 04 40 5502

This annex lists the patent family members relating to the patent documents cited in the above-mentioned European search report.
The members are as contained in the European Patent Office EDP file on
The European Patent Office is in no way liable for these particulars which are merely given for the purpose of information.

23-03-2005

| Patent document cited in search report | | Publication date | Patent family member(s) | | Publication date |
|---|---|---|---|---|---|
| US 6072765 | A | 06-06-2000 | US | 5921926 A | 13-07-1999 |
| | | | US | 6141577 A | 31-10-2000 |
| WO 03062802 | A | 31-07-2003 | US | 2002198457 A1 | 26-12-2002 |
| | | | CA | 2474331 A1 | 31-07-2003 |
| | | | EP | 1470410 A2 | 27-10-2004 |
| | | | WO | 03062802 A2 | 31-07-2003 |
| | | | US | 2005018201 A1 | 27-01-2005 |
| US 5784352 | A | 21-07-1998 | US | 6485413 B1 | 26-11-2002 |
| | | | US | 6111645 A | 29-08-2000 |
| | | | US | 6160826 A | 12-12-2000 |
| | | | US | 6564087 B1 | 13-05-2003 |
| | | | US | 6501551 B1 | 31-12-2002 |
| | | | US | 6282011 B1 | 28-08-2001 |
| | | | US | 5956355 A | 21-09-1999 |
| | | | US | 2001036002 A1 | 01-11-2001 |
| | | | WO | 9701167 A1 | 09-01-1997 |
| | | | US | 6134003 A | 17-10-2000 |

EPO FORM P0459

For more details about this annex : see Official Journal of the European Patent Office, No. 12/82